# DEMANDE DE BREVET EUROPEEN

(11) **EP 0 583 830 A1**
(43) Date de publication de la demande: **23.02.1994**
(21) Numéro de dépôt: 93202374.0
(22) Date de dépôt: 13.08.1993
(51) Int. Cl.: H04N 7/10, H04N 7/20

(54) **Boîtier de raccordement à un système de distribution de signaux de télévision, et système de distribution avec des moyens de sélection**

(30) Priorité: 19.08.1992 FR 9210127
(71) Demandeur: PHILIPS ELECTRONIQUE GRAND PUBLIC, 92150 Suresnes (FR); Philips Electronics N.V., 5621 BA Eindhoven (NL)
(72) Inventeur: Chanteau, Pierre, F-75008 Paris (FR)
(74) Mandataire: Caron, Jean

(57) **Abrégé**

Pour commuter par exemple quatre sources de signaux par satellite, il y a pour chaque usager un commutateur. Ce commutateur sélectionne une source en fonction des caractéristiques d'un signal de commande appliqué à sa sortie de signal HF, et connecte la source sélectionnée à cette sortie. Il est prévu un boîtier de raccordement (75) au niveau de chaque usager possédant un téléviseur (74) et un décodeur satellite (84). Ce boîtier de raccordement comporte un générateur de signal de commande réglable (78) qui est connecté à la fois à l'entrée (81) du décodeur satellite (84) via une inductance d'arrêt et à une liaison bifilaire (83) de courant de commande produit par le décodeur, et il détermine le signal de commande à appliquer en fonction de la valeur des paramètres engendrés par le décodeur satellite.

## Description

La présente invention concerne un boîtier de raccordement et de commande destiné à être utilisé dans une installation d'usager possédant un "décodeur satellite" muni d'une entrée de signaux de télévision provenant d'un satellite, décodeur capable d'appliquer sur cette entrée une tension continue de commande dans le but de commander la sélection, par un appareil externe, d'un signal parmi deux, et muni d'une sortie de courant de commande prévue pour la commande d'un polarisateur magnétique, la dite installation d'usager étant en outre connectée à un système de distribution de signaux de télévision comportant un ensemble de plus de deux sources distinctes de signaux de télévision par satellite, fournissant chacune une pluralité de canaux qui se distinguent les uns des autres par les fréquences qu'ils utilisent, au moins un boîtier dit "boîtier commutateur" muni d'au moins une sortie raccordée par un câble à l'installation d'usager, d'une pluralité d'entrées raccordées chacune à une des dites sources distinctes, et de moyens de commutation, pour sélectionner une de ses entrées et la connecter à sa sortie, cette sélection se faisant en fonction des caractéristiques d'un signal de commande appliqué sur le câble reliant l'installation d'usager au boîtier commutateur.
L'invention concerne en outre un système tel que défini ci-dessus.
Tous les systèmes autorisent l'usager à choisir parmi plusieurs émissions en s'accordant sur une fréquence porteuse ou une autre. Sur la base d'une gamme de fréquences utiles allant de 950 à 1750 Mhz par exemple dans le cas de signaux provenant d'un satellite au moyen d'un décodeur fournissant un signal porté par une fréquence située dans cette gamme de fréquences, avec des bandes d'environ 30 Mhz de largeur, il est possible de distinguer 24 canaux différents. Toutefois ce nombre est encore insuffisant si l'on considère par exemple qu'un ensemble de satellites comme celui connu sous le nom "Astra" comporte déjà plus de 24 canaux. C'est pourquoi on a imaginé un système de distribution dans lequel un usager peut choisir un signal sur un câble parmi une pluralité de câbles.

Un tel système est connu du document "SECOND IEE NATIONAL CONFERENCE ON TELECOMMUNICATIONS", 5 avril 1989, pages 128-132, par D MCGOVERN, ayant pour titre "Satellite television receivers for the domestic market". Le système décrit par ce document comporte un élément de branchement ("4-way splitter switch") à quatre entrées, qui sélectionne une des entrées en fonction d'un signal de commande dont la nature n'est pas précisée.

L'invention se propose de fournir un boîtier de raccordement et de commande et un système dans lequel un usager possédant un décodeur satellite puisse commander le choix d'une source parmi plus de deux sources, indépendamment des autres usagers, en utilisant seulement les moyens de commande (télécommande) fournis avec le téléviseur et/ou avec le décodeur satellite, sans élément de commande supplémentaire propre au système de distribution, et sans avoir à installer une liaison supplémentaire de commande entre l'installation d'usager et le boîtier commutateur.
A cet effet, le boîtier de raccordement selon l'invention est muni :
- d'une première connexion pour relier le dit boîtier de raccordement à la sortie du boîtier commutateur,
- d'une seconde connexion pour relier le dit boîtier de raccordement à l'entrée de signaux de télévision du décodeur satellite,
- d'une troisième connexion pour relier le dit boîtier de raccordement à la sortie de courant de commande du décodeur satellite,
- d'un générateur réglable de signal muni de moyens pour engendrer et appliquer à la première connexion un signal, déterminé en fonction de la valeur du dit courant de commande appliqué à la troisième connexion, et constituant au moins une partie du dit signal de commande,
- de moyens de liaison entre la première connexion et la seconde connexion, les faisant communiquer dans la bande des fréquences de télévision mais empêchant le passage du signal engendré par le générateur de signal.
Selon un premier mode de réalisation, le générateur réglable de signal de commande est muni de moyens pour engendrer et appliquer à la première connexion une tension continue qui peut prendre autant de valeurs discrètes qu'il y a de sélections différentes à réaliser par le boîtier commutateur, tension déterminée en fonction d'une part de la valeur de la dite tension continue appliquée par le décodeur satellite sur la seconde connexion et d'autre part de la valeur du dit courant de commande appliqué à la troisième connexion.

Dans un autre mode de réalisation, le générateur réglable de signal de commande est muni de moyens pour engendrer et appliquer à la première connexion une tension continue qui peut prendre une pluralité de valeurs discrètes et pour y superposer ou non une tension alternative, selon d'une part la valeur de la dite tension continue appliquée par le décodeur satellite sur la seconde connexion et d'autre part la valeur du dit courant de commande appliqué à la troisième connexion.
Dans encore un autre mode de réalisation, le générateur réglable de signal de commande est muni de moyens pour engendrer ou non, en fonction de la valeur du dit courant de commande appliqué à la troisième connexion, une tension alternative appliquée à la première connexion, les moyens de liaison entre la première connexion et la seconde connexion permettant le passage direct de la tension continue de commande appliquée par le décodeur.
On désire pouvoir desservir un grand nombre d'usagers, à partir d'un grand nombre de sources de signaux, avec un travail d'installation réduit et un matériel économique, tout en changeant le moins possible les habitudes des professionnels installateurs.
A cet effet un système comportant un boîtier de raccordement selon l'invention et destiné à desservir une pluralité d'installations d'usager et comportant un faisceau de câbles de descente desservant ces installations d'usager à partir de l'ensemble de sources de signaux est remarquable en ce que, des signaux de télévision terrestre étant en outre disponibles, le faisceau de descente comporte un nombre de câbles de descente égal au nombre de sources distinctes de signaux de télévision par satellite, les signaux de télévision terrestre étant ajoutés sur chacun des câbles aux signaux de télévision par satellite.
Avantageusement, un tel système comporte des éléments de branchement, placés à proximité des installations d'usagers, qui sont constitués chacun d'au moins un boîtier dérivateur et d'au moins un boîtier commutateur, le boîtier dérivateur étant muni de moyens de raccordement pour une pluralité de câbles du faisceau de descente, possédant au moins un groupe de sorties ayant un nombre de sorties égal au nombre de câbles du faisceau de descente raccordables par les dits moyens de raccordement, et contenant des moyens pour prélever de façon permanente une partie de la puissance du signal sur chaque câble et l'appliquer sur une sortie correspondante du groupe de sorties, le boîtier commutateur ayant autant d'entrées que le boîtier dérivateur permet de raccorder de câbles et chacune d'elles étant connectée à une sortie du groupe de sorties du boîtier dérivateur, et le boîtier commutateur a lui même une pluralité de sorties, et est muni de moyens de commutation en nombre égal à celui de ses sorties, chacun de ces moyens de commutation étant affecté à une des sorties, pour sélectionner une des entrées et la connecter à cette sortie, cette sélection se faisant en fonction du dit signal de commande appliqué sur cette sortie.

Ces aspects de l'invention ainsi que d'autres aspects plus détaillés apparaîtront plus clairement grâce à la description suivante d'un mode de réalisation non limitatif.

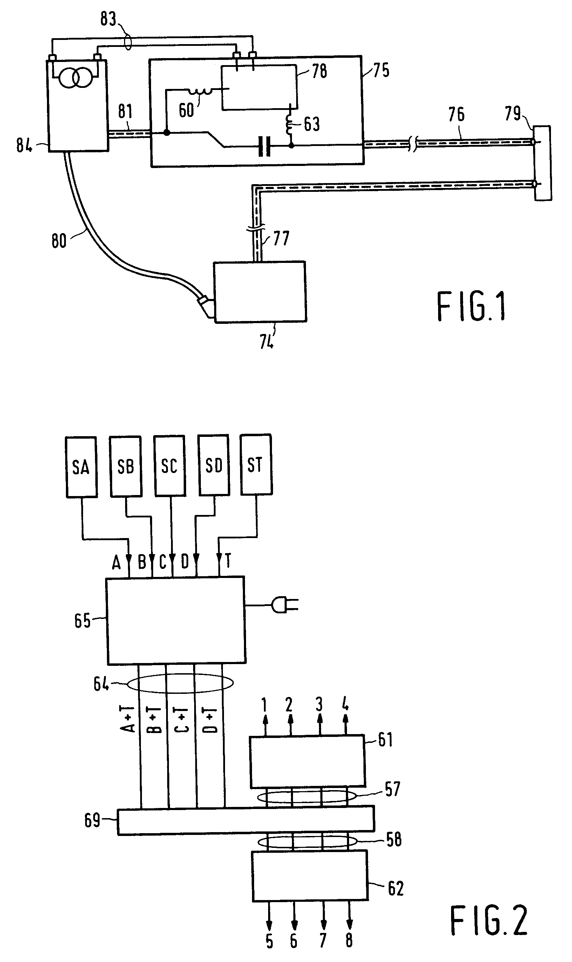

La figure 1 représente schématiquement une installation d'usager. La figure 2 est un schéma d'ensemble d'un système selon l'invention desservant 8 usagers, les installations d'usagers proprement dites n'étant pas représentées.

L'installation d'usager représentée sur la figure 1 comprend :
- un téléviseur 74,
- un décodeur 84 d'émission par satellite muni d'une entrée pour des signaux de télévision provenant d'un satellite,
- un boîtier 75 de raccordement et de commande,
- et un répartiteur 79 relié par un câble d'usager non représenté à une sortie d'un des boîtiers commutateurs qui sera décrit plus loin en regard de la figure 2 (références 61 ou 62). Ce répartiteur comporte un filtre séparateur connu pour séparer selon la fréquence ce qui doit être fourni respectivement au téléviseur 74 et au décodeur 84 (c'est-à-dire respectivement les bandes 40-820 Mhz et 950-1750 MHz). Il transmet aussi les courants continu et basse-fréquence, au moins vers le décodeur 84. Le signal décodé par le décodeur 84 est amené au téléviseur 74 en bande de base par une liaison dite de péritélévision 80.
L'entrée du décodeur pour des signaux de télévision provenant d'un satellite est reliée au boîtier 75 par un câble de liaison 81. Cette liaison peut être faite par un câble très court, le boîtier 75 étant par exemple monté derrière le décodeur 84 ou au moins à proximité immédiate. Il peut même s'agir d'une prise portée par le boîtier 75 et directement enfichée dans la prise ad hoc du décodeur 84 (le boîtier 75 est petit et léger). Le boîtier 75 est lui même relié par un câble 76 au répartiteur 79. En pratique donc , le boîtier de raccordement et de commande est inséré dans le câble entre la sortie du boîtier commutateur (61, 62, figure 2) et l'entrée de signaux de télévision du décodeur satellite. Le téléviseur est relié par un câble 77 au répartiteur 79.
Les câbles sont raccordés par des fiches, non représentées pour alléger la figure.
Le boîtier 75 comporte des moyens de raccordement faisant communiquer en courant alternatif (au moins dans la bande 950-1750 MHz), via une capacité en série, la partie de câble 76 avec la prise ou la partie de câble 81 raccordée au décodeur. En fonction du choix réalisé par l'usager, la plupart des décodeurs du commerce peuvent engendrer une tension continue de 14 ou de 18 volts sur leur prise d'entrée (reliée au câble 81) pour sélectionner une polarisation parmi deux. Certains décodeurs du commerce (mais pas tous) peuvent aussi engendrer un courant continu, dont les valeurs sont habituellement comprises dans une gamme allant de 0 à 42 milliampères, dans une liaison bifilaire (ici 83), pour commander un polariseur magnétique ("polarotor") spécifique, étudié pour fonctionner avec ce décodeur.
Le boîtier de raccordement et de commande 75 contient un générateur 78 de variable électrique de commande qui applique au câble 76 un signal de commande de sélection de source, différent de celui fourni par le décodeur, via une inductance d'arrêt 63. Ce générateur de variable électrique de commande est connecté à la fois au câble 81 venant du décodeur satellite via une inductance d'arrêt 60, et également à la dite liaison bifilaire 83 de courant de commande, et il détermine lui même la valeur de la variable électrique de commande à appliquer, en fonction d'une part de la valeur de la dite tension appliquée par le décodeur satellite sur son entrée 81 et d'autre part de la valeur du dit courant engendré sur la liaison 83. Comme la correspondance entre la valeur du courant et les indications d'un usager peut être programmée dans le décodeur, le générateur 78 n'a pas besoin d'être programmable : c'est le décodeur qui est programmé pour fournir le courant voulu pour chaque choix de l'usager.
Selon un premier exemple de réalisation, les tensions de commande engendrées par le générateur 78 prennent des valeurs discrètes, par exemple 0 volt, 3 volts, 6 volts, 9 volts, etc, dont chacune correspond à une sélection différente à réaliser par le boîtier commutateur. Il est préférable que la valeur 0 volt corresponde à une sélection de la part du commutateur, afin que ce dernier fournisse néanmoins un signal utilisable lorsqu'il est associé à une installation qui ne lui fournit aucune tension de commande (installation ne comportant pas de boîtier de raccordement selon l'invention).
Selon un autre exemple de réalisation, les tensions de commande engendrées par le générateur 78 prennent seulement deux valeurs de tension continue discrètes, par exemple 14 volt et 18 volts, et une tension alternative ayant par exemple une valeur efficace de 1 volt et une fréquence de 22 Khz lui est superposée ou non. On dispose donc soit de simplement 14 volts continus, soit de 14 volts continus plus 1 volt alternatif à 22 kHz, soit de simplement 18 volts continus, soit de 18 volts continus plus 1 volt alternatif à 22 kHz, ce qui procure donc quatre possibilités, dont chacune correspond à une sélection différente à réaliser par le boîtier commutateur. Ce second mode de réalisation est plus facile à réaliser, puisqu'il suffit que le générateur 78 transmette directement la tension qui est présente sur la sortie du décodeur 84, en y ajoutant ou non une composante alternative. Une variante consisterait à remplacer la capacité en série entre les câbles 81 et 76 par un circuit bouchon accordé sur la fréquence de la tension alternative (ici 22kHz), auquel cas le générateur 75 aurait seulement à appliquer ou non la tension alternative à la partie de câble 76, selon la valeur du courant dans la liaison bifilaire 83, la tension continue passant directement du câble 81 vers le câble 76 via le circuit bouchon.
Le système de distribution par câble de signaux de télévision dont le schéma est représenté sur la figure 2 dessert huit installations d'usager. Il comporte plusieurs sources de signaux de télévision SA, SB, SC, SD, ST. La source ST est par exemple une antenne ou un ensemble d'antennes pour la réception d'émissions par voie terrestre, associées à un ou plusieurs amplificateurs situés à proximité pour améliorer le rapport signal/bruit. Les sources SA, SB, SC, SD, utilisent des paraboles de réception d'émissions par satellite, associées aux têtes de réception correspondantes qui ont, entre autres, pour fonction d'abaisser la fréquence de réception pour l'amener dans la bande de 950 à 1750 Mhz déjà mentionnée. Dans le présent exemple il y a donc une source pour la réception d'émissions par voie terrestre, délivrant ses signaux sur un câble référencé T, et il y a quatre sources basées sur des émissions par satellite, délivrant des signaux sur des câbles référencés A, B, C, D. Toutes ces sources sont localisées à proximité l'une de l'autre, par exemple sur le toit d'un immeuble.
Le système est muni en outre, à la sortie des sources de signaux proprement dites connectées en A, B, C, D, T, d'un coupleur 65. Celui ci fournit sur chacune de ses quatre connexions de sortie 64 respectivement les signaux couplés provenant des connexions A et T, les signaux couplés provenant des connexions B et T, les signaux couplés provenant des connexions C et T, les signaux couplés provenant des connexions D et T, ces signaux pouvant en outre être amplifiés. L'ensemble des sources de signaux constitue donc en fin de compte quatre sources distinctes 64. Il est suivi d'un faisceau de descente comportant quatre câbles, c'est-à-dire autant qu'il y a de sources de signaux par satellite.
A proximité des usagers, les câbles du faisceau sont raccordés à un boîtier dérivateur 69, qui les relie par des liaisons 57, 58, faites chacune de quatre conducteurs coaxiaux, aux entrées de deux boîtiers commutateurs 61, 62, munis chacun de quatre prises d'entrée. Chaque prise de sortie d'un de ces boîtiers commutateurs est raccordée à une des dites installations d'usager par un câble (références 1-8).
Les usagers forment ici un groupe de huit, divisé lui même en deux sous-groupes de quatre, chacun des deux sous-groupes étant desservi par un boîtier commutateur, respectivement 61, 62. Chaque boîtier commutateur est muni de moyens non représentés, que l'homme du métier sait facilement fabriquer à partir d'interrupteurs (électroniques ou mécaniques) programmables, pour sélectionner une entrée parmi ses quatre entrées et la connecter à l'une de ses quatre prises de sortie (1-4 ou 5-8) en fonction des caractéristiques d'une variable électrique de commande, et ceci pour chacune des quatre sorties. Cette variable électrique de commande qui est appliquée à chacun des câbles 1 à 8 peut facilement être séparée des signaux de télévision proprement dits du fait de leurs fréquences très différentes.
Un ensemble d'éléments pour constituer un tel système comporte par exemple des boîtiers dérivateurs prévus pour raccorder quatre câbles et comportant deux groupes de quatre sorties, des boîtiers commutateurs à quatre entrées / quatre sorties, des boîtiers commutateurs à quatre entrées / huit sorties, des boîtiers commutateurs à huit entrées / quatre sorties, et des boîtiers commutateurs à huit entrées / huit sorties.
Un système similaire peut aussi être utilisé dans le cas d'une maison individuelle. Dans ce cas il y a encore un ensemble de sources comme les sources SA, SB, ST de la figure 1, avec un coupleur analogue au coupleur 65 de la figure 1, éventuellement sans amplification, pas de dérivateur mais un boîtier commutateur à quatre entrées / quatre sorties, de façon à pouvoir fournir à l'usager individuel jusqu'à quatre prises pour quatre installations de télévision distinctes.

## Revendications

1. Boîtier de raccordement et de commande destiné à être utilisé dans une installation d'usager possédant un "décodeur satellite" muni d'une entrée de signaux de télévision provenant d'un satellite, décodeur capable d'appliquer sur cette entrée une tension continue de commande dans le but de commander la sélection, par un appareil externe, d'un signal parmi deux, et muni d'une sortie de courant de commande prévue pour la commande d'un polarisateur magnétique, la dite installation d'usager étant en outre connectée à un système de distribution de signaux de télévision comportant un ensemble de plus de deux sources distinctes de signaux de télévision par satellite, fournissant chacune une pluralité de canaux qui se distinguent les uns des autres par les fréquences qu'ils utilisent, au moins un boîtier dit "boîtier commutateur" muni d'au moins une sortie raccordée par un câble à l'installation d'usager, d'une pluralité d'entrées raccordées chacune à une des dites sources distinctes, et de moyens de commutation, pour sélectionner une de ses entrées et la connecter à sa sortie, cette sélection se faisant en fonction des caractéristiques d'un signal de commande appliqué sur le câble reliant l'installation d'usager au boîtier commutateur, **caractérisé en ce que** le dit boîtier de raccordement est muni :
- d'une première connexion pour relier le dit boîtier de raccordement à la sortie du boîtier commutateur,
- d'une seconde connexion pour relier le dit boîtier de raccordement à l'entrée de signaux de télévision du décodeur satellite,
- d'une troisième connexion pour relier le dit boîtier de raccordement à la sortie de courant de commande du décodeur satellite,
- d'un générateur réglable de signal muni de moyens pour engendrer et appliquer à la première connexion un signal, déterminé en fonction de la valeur du dit courant de commande appliqué à la troisième connexion, et constituant au moins une partie du dit signal de commande,
- de moyens de liaison entre la première connexion et la seconde connexion, les faisant communiquer dans la bande des fréquences de télévision mais empêchant le passage du signal engendré par le générateur de signal.

2. Boîtier selon la revendication 1, **caractérisé en ce que** son générateur réglable de signal de commande est muni de moyens pour engendrer et appliquer à la première connexion une tension continue qui peut prendre autant de valeurs discrètes qu'il y a de sélections différentes à réaliser par le boîtier commutateur, tension déterminée en fonction d'une part de la valeur de la dite tension continue appliquée par le décodeur satellite sur la seconde connexion et d'autre part de la valeur du dit courant de commande appliqué à la troisième connexion.

3. Boîtier selon la revendication 1, **caractérisé en ce que** son générateur réglable de signal de commande est muni de moyens pour engendrer et appliquer à la première connexion une tension continue qui peut prendre une pluralité de valeurs discrètes et pour y superposer ou non une tension alternative, selon d'une part la valeur de la dite tension continue appliquée par le décodeur satellite sur la seconde connexion et d'autre part la valeur du dit courant de commande appliqué à la troisième connexion.

4. Boîtier selon la revendication 1, **caractérisé en ce que** son générateur réglable de signal de commande est muni de moyens pour engendrer ou non, en fonction de la valeur du dit courant de commande appliqué à la troisième connexion, une tension alternative appliquée à la première connexion, les moyens de liaison entre la première connexion et la seconde connexion permettant le passage direct de la tension continue de commande appliquée par le décodeur.

5. Système de distribution de signaux de télévision desservant au moins une installation d'usager, comportant un ensemble de plus de deux sources distinctes de signaux de télévision par satellite, fournissant chacune une pluralité de canaux qui se distinguent les uns des autres par les fréquences qu'ils utilisent, au moins un boîtier dit "boîtier commutateur" muni d'au moins une sortie raccordée par un câble à l'installation d'usager, d'une pluralité d'entrées raccordées chacune à une des dites sources distinctes, et de moyens de commutation, pour sélectionner une de ses entrées et la connecter à sa sortie, cette sélection se faisant en fonction des caractéristiques d'un signal de commande appliqué sur le câble reliant l'installation d'usager au boîtier commutateur, **caractérisé en ce que**, l'installation d'usager possédant un "décodeur satellite" muni d'une entrée de signaux de télévision provenant d'un satellite, décodeur capable d'appliquer sur cette entrée une tension continue de commande dans le but de commander la sélection, par un appareil externe, d'un signal parmi deux, et muni d'une sortie de courant de commande prévue pour la commande d'un polarisateur magnétique, un boîtier de raccordement et de commande est inséré dans le câble entre la sortie du boîtier commutateur et l'entrée de signaux de télévision du décodeur satellite, et relié en outre à la dite sortie de courant de commande prévue pour la commande d'un polariseur magnétique, ce boîtier de raccordement étant muni d'un générateur de signal de commande qui engendre et applique à la partie de câble reliée à la sortie du boîtier commutateur au moins une partie du dit signal de commande, déterminée en fonction de la valeur du dit courant de commande d'un polariseur magnétique, et de moyens de liaison entre la partie de câble reliée à la sortie du boîtier commutateur et celle reliée à l'entrée de signaux de télévision du décodeur satellite, les faisant communiquer dans la bande des fréquences de télévision mais empêchant le passage du signal engendré par le générateur de signal.

6. Système selon la revendication 5, destiné à desservir une pluralité d'installations d'usager et comportant un faisceau de câbles de descente desservant ces installations d'usager à partir de l'ensemble de sources de signaux, **caractérisé en ce que**, des signaux de télévision terrestre étant en outre disponibles, le faisceau de descente comporte un nombre de câbles de descente égal au nombre de sources distinctes de signaux de télévision par satellite, les signaux de télévision terrestre étant ajoutés sur chacun des câbles aux signaux de télévision par satellite.

7. Système selon l'une des revendications 5 ou 6, **caractérisé en ce qu**'il comporte des éléments de branchement, placés à proximité des installations d'usagers, qui sont constitués chacun d'au moins un boîtier dérivateur et d'au moins un boîtier commutateur, le boîtier dérivateur étant muni de moyens de raccordement pour une pluralité de câbles du faisceau de descente, possédant au moins un groupe de sorties ayant un nombre de sorties égal au nombre de câbles du faisceau de descente raccordables par les dits moyens de raccordement, et contenant des moyens pour prélever de façon permanente une partie de la puissance du signal sur chaque câble et l'appliquer sur une sortie correspondante du groupe de sorties, le boîtier commutateur ayant autant d'entrées que le boîtier dérivateur permet de raccorder de câbles et chacune d'elles étant connectée à une sortie du groupe de sorties du boîtier dérivateur.

8. Système selon la revendication 7, **caractérisé en ce que le** boîtier commutateur a lui même une pluralité de sorties, et est muni de moyens de commutation en nombre égal à celui de ses sorties, chacun de ces moyens de commutation étant affecté à une des sorties, pour sélectionner une des entrées et la connecter à cette sortie, cette sélection se faisant en fonction du dit signal de commande appliqué sur cette sortie.
